# EUROPÄISCHE PATENTANMELDUNG

(11) **EP 1 180 522 A1**
(43) Veröffentlichungstag der Anmeldung: **20.02.2002**
(21) Anmeldenummer: 00117799.7
(22) Anmeldetag: 18.08.2000
(51) Int. Cl.: C07F 7/18, C07F 7/12, C08K 5/548, C08L 9/06, C08L 9/00

(54) **Gemische von Alkoxysilyl-Propyl-Polysulfanen und Kautschukmischungen, die diese Gemische enthalten**

(71) Anmelder: Degussa AG, 40474 Düsseldorf (DE)
(72) Erfinder: Batz-Sohn, Christoph, Dr., 63454 Hanau-Mittelbuchen (DE); Michel, Rudolph, 63579 Freigericht (DE); Luginsland, Hans-Detlef, Dr., 50968 Köln (DE)

(57) **Zusammenfassung**

Die Erfindung betrifft Organosiliciumverbindungen der allgemeinen Formel I,

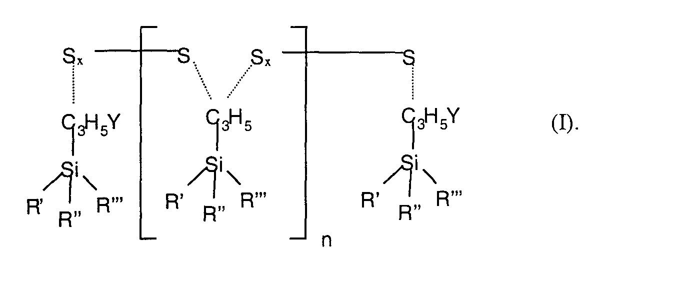

Die Organosiliciumverbindungen werden hergestellt aus einer Verbindung der allg. Formel (II) 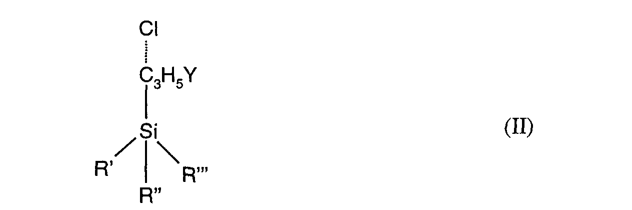 durch Umsetzung mit MSH, M₂S_{z} oder M₂S/S.

Die Organosiliciumverbindungen können in Kautschukmischungen verwendet werden.

## Beschreibung

Die vorliegende Erfindung betrifft Organosiliciumverbindungen, ein Verfahren zu ihrer Herstellung und ihrer Verwendung in Kautschukmischungen.

Es ist bekannt, schwefelhaltige Organosiliciumverbindungen, wie 3-Mercaptopropyltrimethoxysilan oder Bis-(3-[Triethoxysilyl]-propyl)tetrasulfan, als Silanhaftvermittler oder Verstärkungsadditiv in oxidisch gefüllten Kautschukmischungen, wie zum Beispiel für Laufflächen und andere Teile von Autoreifen, einzusetzen (DE 2 141 159, DE 2 212 239, US 3 978 103, US 4 048 206).

Des weiteren ist bekannt, daß schwefelhaltige Silanhaftvermittler bei der Herstellung von Dichtungsmassen, Gießformen für den Metallguß, Farb- und Schutzanstrichen, Klebstoffen, Asphaltmischungen und oxidisch gefüllten Kunststoffen, Fixierung von Wirkstoffen und funktionellen Einheiten auf anorganischen Trägermaterialien, zum Beispiel bei der Immobilisierung von homogenen Katalysatoren und Enzymen, Festbettkatalysatoren und bei der Flüssigkeitschromatographie verwendet werden.

Es ist aus EP 0 969 033 bekannt, dass schwefelfunktionelle Organosilane, die mehr als eine Polysulfanfunktion pro Siliciumeinheit besitzen, und daher polymere oder oligomere Strukturen ausbilden, durch erhöhte Kopplungsausbeuten ein verbessertes Eigenschaftsbild in Kautschukmischungen besitzen. Diese Silane haben allerdings den Nachteil, dass die für ihre Herstellung als Rohstoff benötigten olefinischen Dichloride, wie zum Beispiel 3,4-Dichlorbuten, nicht in großtechnischen Mengen zur Verfügung stehen.

Bei der Herstellung von 3-Chlorpropyltrichlorsilan, welches als Ausgangsmaterial zur Herstellung von organofunktionellen Silanen, wie zum Beispiel 3-Mercaptopropyltrimethoxysilan oder Bis-(3-[triethoxysilyl]-propyl)tetrasulfan, in großen Mengen benötigt wird, entstehen durch eine unerwünschte Nebenreaktion große Mengen an Propyltrichlorsilan (PTS) (EP 0 519 181). Diese Nebenreaktion verbraucht zusätzlich das heute als Rohstoff knappe Trichlorsilan und macht dadurch das Verfahren zu ihrer Herstellung der oben genannten Haftvermittler teuer.

Nachteile der bekannten Organosiliciumverbindungen sind die teuren Ausgangsverbindungen beziehungsweise ist die Bildung von großen Mengen an Nebenprodukten wie Propyltrichlorsilan.

Aufgabe der vorliegenden Erfindung ist es auf Basis des Nebenproduktes Propyltrichlorsilan neue Haftvermittler für Kautschukanwendungen zu entwickeln, die preiswert hergestellt werden können und mindestens genauso wirkungsvoll wie zum Beispiel Bis-(3-[triethoxysilyl]propyl)tetrasulfan sind.

Gegenstand der Erfindung sind Organosiliciumverbindungen, welche dadurch gekennzeichnet sind, dass diese der allgemeinen Formel I entsprechen, 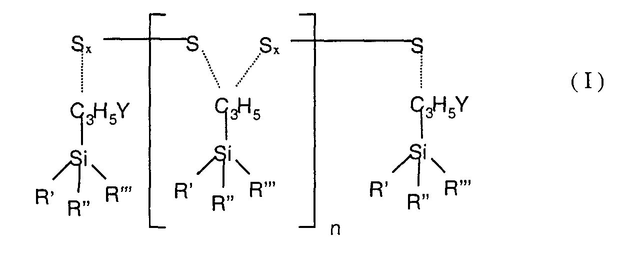 wobei
R', R'', R''' unabhängig voneinander, (C₁ - C₄)Alkoxy, (C₁-C₄)Haloalkoxy oder Cl und
Y, H oder Cl bedeuten,
x = 0 - 6 und
n = 0 - 30 ist.

Die "·····" in Formel (I) stellen eine chemische Bindung dar, die an jedes der drei C-Atome der C₃H₅(Y)-Gruppe gebunden sein kann und die 5 Wasserstoffe sowie die Gruppe Y die jeweils freien Valenzen besetzen.

Ein weiterer Gegenstand der Erfindung ist ein Verfahren zur Herstellung von Organosiliciumverbindungen der allgemeinen Formel I, welches dadurch gekennzeichnet ist, dass man Verbindungen der allgemeinen Formel (II) und/oder deren Gemische, 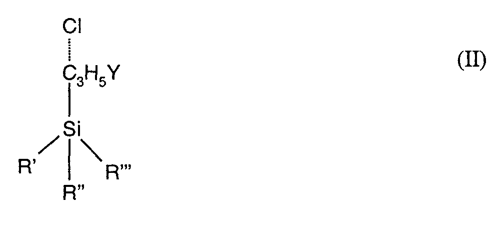 wobei R', R'', R''', Y und "·····" die Bedeutung gemäß Formel I haben, mit MSH, M₂S_{z} oder mit M₂S/S, wobei M ein Ammoniumion oder Metallion, beispielsweise Natriumion oder Kaliumion, und z im statistischen Mittel eine Zahl zwischen 2 und 6 ist, umsetzt.

In einer Ausführungsform des erfindungsgemäßen Verfahrens kann die Umsetzung in einem Lösungsmittel, vorzugsweise in einem inerten Lösungsmittel oder Gemischen davon, wie in einem aromatischen Lösungsmittel, beispielsweise Chlorbenzol, einem halogenierten Kohlenwasserstoff, beispielsweise Chloroform oder Methylenchlorid, einem Ether, beispielsweise Diisopropylether, tert. Butylmethylether, Tetrahydrofuran oder Diethylether, Acetonitril, Carbonsäureester, beispielsweise Essigsäureethylester, Essigsäuremethylester oder Essigsäureisopropylester, einem Alkohol, beispielsweise Methanol, Ethanol, n-Propanol, i-Propanol, n-Butanol, sec. Butanol oder tert. Butanol, durchgeführt werden.

Die Reaktionstemperaturen können zwischen 20°C und 150°C, vorzugsweise 35°C bis 100°C, besonderes bevorzugt 55 °C bis 85°C, betragen.

Gegebenenfalls kann die Umsetzung unter katalytischen Bedingungen bei Drücken zwischen Normaldruck oder einem Überdruck bis zu 6 bar erfolgen.

Zu einer Suspension von MSH, M₂S/S oder M₂S_{z} in einem Lösungsmittel kann die Verbindung der Formel II zugegeben werden.

Die Umsetzungsdauer kann bis 24 h, vorzugsweise 1 bis 8 h, betragen.

Nach Reaktionsende kann vom entstandenen Niederschlag abfiltiert und das Lösungsmittel entfernt werden.

Die erfindungsgemäßen Verbindungen der Formel I können als klare, gelb bis rot gefärbte Flüssigkeiten zurückbleiben.

In einer bevorzugten Ausführungsform kann Ethanol als Lösungsmittel verwendet werden. Vorzugsweise können die Umsetzungen unter absoluten Bedingungen, das heißt unter Feuchtigkeitsausschluß, durchgeführt werden. Es können vorgetrocknete Lösungsmittel, wie beispielsweise Ethanol p.a., verwendet werden.

Besonders geeignet als Metallion der Verbindungen MSH, M₂S_{z}, M₂S kann Natrium verwendet werden.

Verfahren zur Sulfidierung sind und in JP 722 8588, US-A 54 05 985 und US-A 54 66 848 beschrieben. Die Umsetzung kann katalysiert erfolgen. Der Katalysator kann dabei in katalytischen oder stöchiometrischen Mengen eingesetzt werden.

Verbindungen der allgemeinen Formel(II) und/oder deren Gemische können durch geeignete Reaktionen (z.B. Alkoxyverbindungen durch Alkoholyse, Haloalkoxyverbindungen durch Umsetzung mit Haloalkoholen) aus Gemischen der Verbindungen der allgemeinen Formel (III), 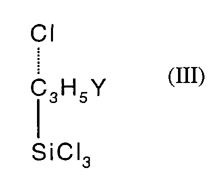 wobei Y und "·····" die vorgenannte Bedeutung haben, hergestellt werden. Verbindungen der allgemeinen Formel (III) und/oder deren Gemische können durch thermische Chlorierung von Propyltrichlorsilan (PTS) ( Cl₃Si-C₃H₇ + Cl₂ → Cl·····C₃H₅Y-(SiCl₃) + HCl ) bei Temperaturen von 70° bis 150° hergestellt werden. Propyltrichlorsilan und Chlor können in einem molaren Verhältnis von 1:0,5 bis 1:1/6 verwendet werden. Diese Reaktion erfordert keinerlei Katalysatoren oder Licht. Die Trichlorsilylgruppe von Organochlorsilanen ist gegenüber der Chlorierung inert, das heißt es wird beispielsweise kein SiCl₄ abgespalten. Die Reaktion kann zweckmäßiger Weise in flüssiger Phase beim Siedepunkt des Propyltrichlorsilan erfolgen. Das Chlorgas kann vorher getrocknet und fein verteilt gasförmig durch die Reaktionsmischung geleitet werden. Das als Nebenprodukt entstehende HCl kann über einen Rückflusskühler das System verlassen. Die Chlorierung kann zweckmäßigerweise bei hohem Chlorunterschuss durchgeführt werden, um die Bildung von Dichloriden statistisch zu vermeiden. Analoge Verfahren sind bekannt und werden beispielsweise für die Herstellung von Mono-Chloralkanen großtechnisch angewendet (Ullmann Band 9, "Chlorkohlenwasserstoffe, aliphatische"). Diese Chlorierungen können so betrieben werden, dass ständig ein Teil der Chlorierungsmischung, die einen hohen Überschuss an Propyltrichlorsilan enthält, destillativ in Edukt und Produkt aufgetrennt wird und das Edukt Propyltrichlorsilan in den Reaktionsraum zurückgeführt wird. Somit ist eine kontinuierliche Fahrweise gegeben und die Bildung von unerwünschten Dichlorpropyltrichlorsilanen weitestgehend unterdrückt. Propyltrichlorsilan (PTS), deren drei mögliche Isomeren 1-Chlorpropyltrichlorsilan, 2-Chlorpropyltrichlorsilan und 3-Chlorpropyltrichlorsilan (Verhältnis ca. 1:4:4), sowie die in geringem Maße gebildeten höher chlorierten Produkte lassen sich destillativ trennen.

Ein weiterer Gegenstand der Erfindung sind Kautschukmischungen, welche dadurch gekennzeichnet sind, daß sie Kautschuk, Füllstoff, vorzugsweise gefällte Kieselsäure und/oder Ruß, mindestens eine Organosiliciumverbindung der Formel (I) und gegebenenfalls weitere Kautschukhilfsmittel enthalten.

Für die Herstellung erfindungsgemäßer Kautschukmischungen eignen sich neben Naturkautschuk auch Synthesekautschuke. Bevorzugte Synthesekautschuke sind beispielsweise bei W. Hofmann, Kautschuktechnologie, Genter Verlag, Stuttgart 1980, beschrieben. Sie umfassen u.a.
- Polybutadien (BR)
- Polyisopren (IR)
- Styrol/Butadien-Copolymerisate mit Styrolgehalten von 1 bis 60, vorzugsweise 5 bis 50 Gew.-% (SBR)
- Isobutylen/Isopren-Copolymerisate (IIR)
- Butadien/Acrylnitril-Copolymere mit Acrylnitrilgehalten von 5 bis 60, vorzugsweise 10 bis 50 Gew. -% (NBR)
- Ethylen/Propylen/Dien-Copolymerisate (EPDM)
sowie Mischungen dieser Kautschuke.

Die erfindungsgemäßen Kautschukmischungen können weitere Kautschukhilfsprodukte enthalten wie unter anderem Reaktionsbeschleuniger, -verzögerer, Alterungsschutzmittel, Stabilisatoren, Verarbeitungshilfsmittel, Weichmacher, Wachse, Metalloxide sowie Aktivatoren, wie Triethanolamin, Polyethylenglykol, Hexantriol, die der Kautschukindustrie bekannt sind.

Die Kautschukhilfsmittel werden in üblichen Mengen, die sich unter anderem nach dem Verwendungszweck richten, eingesetzt. Übliche Mengen sind zum Beispiel Mengen von 0,1 bis 50 Gew.-% bezogen auf Kautschuk.

Als Vernetzer können Schwefel oder organische Schwefelspender dienen. Die erfindungsgemäßen Kautschukmischungen können darüber hinaus Vulkanisationsbeschleuniger enthalten.

Beispiele für geeignete Vulkanisationsbeschleuniger sind Mercaptobenzthiazole, Sulfenamide, Guanidine, Thiurame, Dithiocarbamate, Thioharnstoffe und Thiocarbonate.

Die Vulkanisationsbeschleuniger und Schwefel können in Mengen von 0,1 bis 10 Gew.-%, bevorzugt 0,1 bis 5 Gew.-%, bezogen auf Kautschuk, eingesetzt werden.

Die Abmischung der Kautschuke mit dem Füllstoff, gegebenenfalls Kautschukhilfsmitteln und der Organosilane kann in üblichen Mischaggregaten, wie Walzen, Innenmischern und Mischextrudern, durchgeführt werden. Üblicherweise werden solche Kautschukmischungen im Innenmischern hergestellt, wobei zunächst in einer oder mehreren aufeinanderfolgenden thermomechanischen Mischstufen die Kautschuke, der Füllstoff, die Organosilane und die Kautschukhilfsmittel bei 100 bis 170°C eingemischt werden. Dabei kann sich die Zugabereihenfolge und der Zugabezeitpunkt der Einzelkomponenten entscheidend auf die erhaltenen Mischungseigenschaften auswirken. Die so erhaltene Kautschukmischung wird dann üblicherweise in einem Innenmischer oder auf einer Walze bei 40-110°C mit den Vernetzungschemikalien versetzt und zur sogenannten Rohmischung für die nachfolgenden Prozeßschritte, wie zum Beispiel Formgebung und Vulkanisation, verarbeitet.

Die Vulkanisation der erfindungsgemäßen Kautschukmischungen kann bei Temperaturen von 80 bis 200°C, bevorzugt 130 bis 180°C, gegebenenfalls unter Druck von 10 bis 200 bar erfolgen.

Die erfindungsgemäßen Kautschukmischungen eignen sich zur Herstellung von Formkörpern, zum Beispiel für die Herstellung von Luftreifen, Reifenlaufflächen, Kabelmänteln, Schläuchen, Treibriemen, Förderbändern, Walzenbelägen, Reifen, Schuhsolen, Dichtungsringen und Dämpfungselementen.

Das erfindungsgemäße Verfahren hat den Vorteil, daß das bei der Herstellung von Bis- (3-[triethoxysilyl]-propyl) tetrasulfan in großen Mengen anfallende Nebenprodukt Propyltrichlorsilan sinnvoll verwertet wird.

Durch die thermische Chlorierung von Propyltrichlorsilan (PTS) wird ein einfacher und preiswerter Zugang zu schwefelfunktionellen Haftvermittlern erhalten. Die Wirkungsweise als Haftvermittler in Kautschukmischungen ist mit derjenigen von Bis-(3-[triethoxysilyl]propyl)tetrasulfan identisch. Bei erhöhtem Anteil von Polysulfanfunktionen pro Siliciumeinheit kann, welche durch überstöchiometrische Chlorierung erzielt werden kann, die Wirksamkeit als Haftvermittler sogar gesteigert werden.

### Beispiele

### Beispiel 1: Chlorierung von Propyltrichlorsilan (PTS)

In einem 11-Vierhalskolben mit Gaseinleitungsrohr, Tropftrichter, Rückflußkühler, Heizpilz und Innenthermometer werden 500 g Propyltrichlorsilan vorgelegt und zum Rückfluss erhitzt. Über einen Auslass am Boden des Kolbens werden mittels einer Dosierpumpe pro Stunde ca. 400 ml Flüssigkeit entnommen und auf eine Destillationskolonne gegeben, die in der Lage ist, die chlorierten Produkte als Sumpf sauber abzutrennen. Das Kopfprodukt dieser Kolonne enthält somit fast reines Propyltrichlorsilan, welches zurück in den Reaktionskolben fließt. Nachdem sich hier ein stabiler Kreislauf gebildet hat, wird mit der Dosierung von 40 g Chlorgas pro Stunde begonnen, welches zuvor mittels Durchleiten durch konzentrierte Schwefelsäure getrocknet wird. Gleichzeitig werden über den Tropftrichter 100 g Propyltrichlorsilan pro Stunde dosiert, sodass sich insgesamt ein kontinuierlicher Betrieb ergibt. Am Boden der Kolonne werden nach Einstellung eines stationären Betriebszustands pro Stunde ca. 120 g chloriertes Produkt abgezogen. Durch diese Fahrweise ergibt sich rechnerisch bei der Chlorierung ein molarer vierfacher Propyltrichlorsilan -Überschuss, so dass die Bildung von Dichloriden zurückgedrängt wird.
Das gebildete Produkt besitzt laut Gaschromatographie folgende Zusammensetzung (Gew%): 9,95% 1-Chlorpropyltrichlorsilan, 42,11% 2-Chlorpropyltrichlorsilan, 45,48% 3-Chlorpropyltrichlorsilan und 2,73% dichlorierter Produkte (insgesamt 6 Isomere).

### Beispiel 2

460,5 g des Produktgemisches aus Beispiel 1 werden in einem 1 l-Dreihalskolben mit Gaseinleitungsrohr, Rückflusskühler und Rührer tropfenweise unter Durchleiten von N₂ (um entstehendes HCl auszutreiben) mit 413 ml Ethanol (10% Überschuss) versetzt. Nach Beendigung der Zugabe wird noch 1 h unter Rühren erhitzt. Nach Abkühlung wird die Reaktionsmischung durch Zugabe von 50 ml Natriumethanolat neutralisiert und anschließend filtriert. Man erhält 492,1 g einer klaren Flüssigkeit, die NMR-analytisch als Gemisch aus 30% 3-Chlorpropyltriethoxysilan, 33% 2-Chlorpropyltriethoxysilan, 8% 1-Chlorpropyltriethoxysilan sowie geringen Anteile anderer Verbindungen identifiziert wird.

### Beispiel 3

158,9 g des Silangemisches aus Beispiel 2 werden in 160 ml Ethanol gelöst und mit 34,9 g Schwefel vermischt. Anschließend gibt man 28,3 g getrocknetes Na₂S zu, wobei die Reaktionswärme die gerührte Reaktionsmischung zum Sieden bringt. Man läßt 2 h unter Rückfluss reagieren, kühlt ab und filtriert von dem entstanden Feststoff ab. Nach Abdestillieren des Lösungsmittels verbleiben 141,9 g einer roten, klaren Flüssigkeit, die nach Elementaranalyse 19,8 Gew% Schwefel enthält, zurück.

### Beispiel 4

Die für die Kautschukmischungen verwendete Rezeptur ist in der folgenden Tabelle 1 angegeben. Dabei bedeutet die Einheit phr Gewichtsanteile bezogen auf 100 Teile des eingesetzten Rohkautschuks. Das allgemeine Verfahren zur Herstellung von Kautschukmischungen und deren Vulkanisate ist in dem folgenden Buch beschrieben: "Rubber Technology Handbook", W. Hofmann, Hanser Verlag 1994.

**Tabelle 1**

| Substanz | Bsp. (phr) |
|---|---|
| **1. Stufe** | |
| Buna VSL 5025-1 | 96 |
| Buna CB 24 | 30 |
| Ultrasil 7000 GR | 80 |
| ZnO | 3 |
| Stearinsäure | 2 |
| Naftolen ZD | 10 |
| Vulkanox 4020 | 1,5 |
| Protector G 35 P | 1 |
| Silane gemäß Bsp. | variabel |

| **2. Stufe** | |
|---|---|
| Batch Stufe 1 | |

| **3. Stufe** | |
|---|---|
| Batch Stufe 2 | |
| Vulkacit D | 1 |
| Vulkacit CZ | 1,5 |
| Schwefel | variabel |

Bei dem Polymer VSL 5025-1 handelt es sich um ein in Lösung polymerisiertes SBR-Copolymer der Bayer AG mit einem Styrolgehalt von 25 Gew.-% und einem Butadiengehalt von 75 Gew.-%. Von dem Butadien sind 73 % 1,2, 10 % cis 1,4 und 17 % trans 1,4 verknüpft. Das Copolymer enthält 37,5 phr Öl und weist eine Mooney-Viskosität (ML 1+4/100°C) von 50 ±4 auf.

Bei dem Polymer Buna CB 24 handelt es sich um ein cis 1,4-Polybutadien (Neodymtyp) der Bayer AG mit cis 1,4-Gehalt von 97 %, einem trans 1,4-Gehalt von 2 %, einem 1,2-Gehalt von 1 % und einer Mooney-Viskosität von 44 ±5.

Als aromatisches Öl wird Naftolen ZD der Chemetall verwendet. Bei Vulkanox 4020 handelt es sich um 6PPD der Bayer AG und Protektor G35P ist ein Ozonschutzwachs der HB-Fuller GmbH. Vulkacit D (DPG) und Vulkazit CZ (CBS) sind Handelsprodukte der Bayer AG.

Ultrasil 7000 GR ist eine gut dispergierbare gefällte Kieselsäure der Degussa-Hüls AG mit einer BET Oberfläche von 170 m²/g. Das monofunktionelle Silan Hexadecyltriethoxysilan (HDTES) von der Degussa-Hüls AG wird als Referenz verwendet.

Die Kautschukmischungen werden in einem Innenmischer entsprechend der Mischvorschrift in Tabelle 2 hergestellt.

**Tabelle 2**

| **Stufe 1** | |
|---|---|
| **Einstellungen** | |
| Mischaggregat | Werner & Pfleiderer E-Typ |
| Drehzahl | 70 min⁻¹ |
| Stempeldruck | 5,5 bar |
| Leervolumen | 1,58 L |
| Füllgrad | 0,56 |
| Durchflußtemp | 80°C |

| **Mischvorgang** | |
|---|---|
| 0 bis 1 min | Buna VSL 5025-1 + Buna CB 24 |
| 1 bis 3 min | 1/2 Kieselsäure, ZnO, |
| | Stearinsäure,Naftolen ZD, Silan |
| 3 bis 4 min | 1/2 Kieselsäure, Alterungsschutz |
| 4 min | Säubern |
| 4 bis 5 min | Mischen |
| 5 min | Säubern |
| 5 bis 6 min | Mischen und ausfahren |
| | |
| Batch-Temp. | 145-150°C |
| Lagerung | 24 h bei Raumtemperatur |

| **Stufe 2** | |
|---|---|
| **Einstellungen** | |
| Mischaggregat | wie in Stufe 1 bis auf: |
| Drehzahl | 80 min⁻¹ |
| Durchflußtemp. | 80°C |
| Füllgrad | 0,53 |

| Mischvorgang | |
|---|---|
| 0 bis 2 min | Batch Stufe 1 aufbrechen |
| 2 bis 5 min | Batchtemperatur 150°C durch |
| | Drehzahlvariation halten |
| 5 min | Ausfahren |
| Batch-Temp. | 150°C |
| Lagerung | 4 h bei Raumtemperatur |

| **Stufe 3** | |
|---|---|
| **Einstellungen** | |
| Mischaggregat | wie in Stufe 1 bis auf |
| Drehzahl | 40 min⁻¹ |
| Füllgrad | 0,51 |
| Durchflußtemp | 50°C |

| **Mischvorgang** | |
|---|---|
| 0 bis 2 min | Batch Stufe 2, Beschleuniger,Schwefel |
| 2 min | ausfahren und auf Labormischwalzwerk |
| | Fell bilden, (Durchmesser 200 mm, Länge 450 mm, Duchflußtemperatur 50°C) |
| | |
| | Homogenisieren: |
| | 3* links, 3* rechts einschneiden und |
| | umklappen sowie |
| | 8* bei weitem Walzenspalt (1 mm) und |
| | 3* bei engem Walzenspalt (3,5 mm) |
| | stürzen |
| | Fell ausziehen |
| Batch-Temp | 85-95°C |

In Tabelle 3 sind die Methoden für die Gummitestung zusammengestellt.

**Tabelle 3**

| Physikalische Testung | Norm/Bedingungen |
|---|---|
| ML 1+4, 100°C, 3. Stufe | DIN 53523/3, ISO 667 |
| Vulkameterprüfung, 165°C | DIN 53529/3, ISO 6502 |
| Dmax-Dmin (dNm) | |
| t10% und t90% (min) | |
| Zugversuch am Ring, 23°C | DIN 53504, ISO 37 |
| Zugfestigkeit (Mpa) | |
| Spannungswerte (Mpa) | |
| Bruchdehnung (%) | |
| Shore-A-Härte, 23°C (SH) | DIN 53 505 |
| Viskoelastische Eigenschaften, | DIN 53 513, ISO 2856 |
| 0 bis 60°C, 16 Hz, 50 N Vorkraft | |
| und 25 N Amplitudenkraft | |
| Speichermodul E' (Mpa) | |
| Verlustsmodul E'' (Mpa) | |
| Verlustfaktor tan δ **()** | |
| Ball Rebound, 23°C (%) | ASTM D 5308 |
| DIN-Abtrieb, 10 N Kraft (mm³) | DIN 53 516 |
| Dispersion ( ) | ISO/DIS 11345 |

In dem Beispiel wird die Referenzmischung (A) mit 5 phr des Alkylsilans Hexadecyltriethoxysilan und 2,2 phr Schwefel mit der Mischung (B), die 6,4 phr des erfindungsgemäßen Silans gemäß Beispiel 3 und 1,5 phr Schwefel enthält, verglichen. Die Schwefelmengen sind so gewählt, dass die Mengen an mobilem Schwefel vergleichbar sind. Das Alkylsilan Hexadecyltriethoxysilan hydrophobiert ausschließlich die Kieselsäure. Eine Anbindung zum Kautschuk kann nicht erfolgen.

Tabelle 4 zeigt die Ergebnisse der gummitechnischen Prüfung. Die Mischung (A) wird 40 Minuten und die Mischung (B) 20 min bei 165°C vulkanisiert.

**Tabelle 4**

| | | **(A)** | **(B)** |
|---|---|---|---|
| ML (1+4) | (ME) | 50 | 65 |
| Dmax-Dmin | (dNm) | 12,6 | 17,5 |
| t10% | (min) | 3,0 | 1,4 |
| t90% | (min) | 22,0 | 9,9 |
| Shore-A-Härte | (SH) | 51 | 63 |
| Zugfestigkeit | (MPa) | 10,9 | 16,9 |
| Spannungswert 100% | (MPa) | 0,9 | 1,7 |
| Spannungswert 300% | (MPa) | 2,9 | 8,2 |
| Bruchdehnung | (%) | 660 | 480 |
| DIN-Abrieb | (mm³) | 203 | 84 |
| Ball-Rebound | (%) | 27,5 | 33,0 |
| E' (0°C) | (MPa) | 11,1 | 14,2 |
| E" (0°C) | (MPa) | 5,3 | 6,8 |
| tan δ (0°C) | ( ) | 0,480 | 0,475 |
| E' (60°C) | (MPa) | 5,2 | 6,5 |
| E" (60°C) | (MPa) | 0,8 | 0,9 |
| tan δ (60°C) | ( ) | 0,153 | 0,135 |
| Dispersion | ( ) | 7 | 9 |

Wie man anhand der Daten in Tabelle 4 eindeutig erkennt, liegt das Gummiwertebild der Mischung (B) mit dem erfindungsgemäßen Silan deutlich über dem der Referenz (A). Unter anderem belegen die höheren Spannungswerte, der niedrigere DIN-Abrieb und der niedrigere tan δ (60°C) Wert eine Kopplungsreaktion zwischen Füllstoff und Kautschuk.

## Patentansprüche

1. Organosiliciumverbindungen, **dadurch gekennzeichnet, dass** diese der allgemeinen Formel I entsprechen, 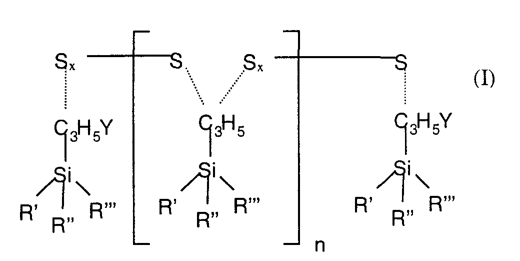 wobei
R', R'', R''' unabhängig voneinander, (C₁ - C₄)Alkoxy, (C₁- C₄)Haloalkoxy oder Cl und
Y, H oder Cl bedeuten,
x = 0 - 6 und
n = 0 - 30 ist.

2. Verfahren zur Herstellung der Organosiliciumverbindungen nach Anspruch 1, **dadurch gekennzeichnet, dass** man Verbindungen der allgemeinen Formel (II) und/oder deren Gemische, 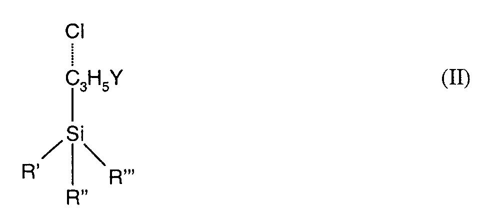 wobei R', R'', R''' und Y die Bedeutung gemäß Formel I haben, mit MSH, M₂S_{z} oder mit M₂S/S, wobei M ein Ammoniumion oder Metallion, und z im statistischen Mittel eine Zahl zwischen 2 und 6 ist, umsetzt.

3. Verfahren zur Herstellung der Organosiliciumverbindungen nach Anspruch 2, **dadurch gekennzeichnet, daß** man Verbindungen der allgemeinen Formel (III) und/oder deren Gemische, 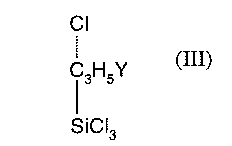 wobei Y die Bedeutung gemäß Formel I hat, mit Alkoholen oder Haloalkoholen zu Verbindungen der allgemeinen Formel (II) umsetzt.

4. Verfahren zur Herstellung der Organosiliciumverbindungen nach Anspruch 3, **dadurch gekennzeichnet, daß** man Propyltrichlorsilan mit Chlor bei Temperaturen von 70° bis 150° zu Verbindungen der allgemeinen Formel (III) umsetzt.

5. Verfahren zur Herstellung der Organosiliciumverbindungen nach Anspruch 4, **dadurch gekennzeichnet, daß** man Propyltrichlorsilan und Chlor in einem molaren Verhältnis von 1:0,5 bis 1:1/6 verwendet.

6. Verwendung der Organosiliciumverbindungen nach Anspruch 1 in Kautschukmischungen.

7. Kautschukmischungen, **dadurch gekennzeichnet, daß** sie Kautschuk, Füllstoff, mindestens eine Organosiliciumverbindung gemäß Anspruch 1 und gegebenenfalls weitere Kautschukhilfsmittel enthalten.
